# EUROPÄISCHE PATENTANMELDUNG

(11) **EP 0 860 306 A1**
(43) Veröffentlichungstag der Anmeldung: **26.08.1998**
(21) Anmeldenummer: 97102759.4
(22) Anmeldetag: 20.02.1997
(51) Int. Cl.: B60G 11/27, B60G 7/04

(54) **Luftfeder**

(71) Anmelder: BPW Bergische Achsen Kommanditgesellschaft, 51674 Wiehl (DE)
(72) Erfinder: Ebert, Jörg, Dr., 50858 Köln (DE); Berghaus, Roland, 51766 Engelskirchen (DE); Kopplow, Hans W., 51588 Nümbrecht (DE)
(74) Vertreter: Stenger, Watzke & Ring Patentanwälte

(57) **Zusammenfassung**

Die Erfindung betrifft eine Luftfeder 5 für Luftfederachsen mit einem fahrgestellfesten Deckel 6 und einem auf einem rückwärtigen Ende eines Längslenkers 3 festgelegten Tauchkolben 8 sowie einem zwischen Deckel 6 und Tauchkolben 8 angeordneten Rollbalg 7. Um eine einteilige Luftfeder 5 zu schaffen, die auch für eine Kran- und Bahnverladung geeignet ist, wird im Innern des Rollbalges 7 mindestens ein den Deckel 6 mit dem Tauchkolben 8 verbindendes, die Streckung des Rollbalges 7 begrenzendes Halteelement 11 angeordnet.

## Beschreibung

Die Erfindung betrifft eine Luftfeder für Luftfederachsen mit einem fahrgestellfesten Deckel und einem auf einem rückwärtigen Ende eines Längslenkers festgelegten Tauchkolben sowie einem zwischen Deckel und Tauchkolben angeordneten Rollbalg.

Eine solche Luftfeder ist beispielsweise aus der DE-C-31 47 231 bekannt. Diese Luftfedern haben sich im normalen Fahrbetrieb bewährt, jedoch gibt es verschiedene Betriebszustände, bei denen die Ausfederung der Achse eingeschränkt werden muß, um Beschädigungen der Stoßdämpfer und/oder der Luftfederbälge zu vermeiden. Dies gilt insbesondere für Fahrzeuge, die sehr schnell entladen werden, wie z. B. Kippfahrzeuge und Wechselpritschenanhänger, sowie für Fahrzeuge im Heavy Duty Einsatz, die wegen des unebenen Untergrundes besonderen Belastungen ausgesetzt sind. Darüber hinaus sind die bekannten Luftfedern für eine Kran- oder Bahnverladung der mit ihnen ausgestatteten Fahrzeuge nicht geeignet, weil dabei der Rollbalg durch das Gewicht der Achse unter Erzeugung eines Vakuums vollständig ausgerollt und dabei von dem Gewicht der Achse und der eigenen Druckkraft aus seiner Einbindung am Deckel oder Tauchkolben herausgezogen werden kann. Außerdem besteht die Gefahr, daß der vollständig gestreckte Rollbalg beim Absetzen des Fahrzeuges nicht wieder nach außen über den Tauchkolben abrollt, sondern nach innen eingefaltet und beschädigt wird.

Um dies zu verhindern, ist es bekannt, zwischen dem Fahrzeugrahmen und der Achse besondere Fangvorrichtungen, beispielsweise Drahtseile, vorzusehen. Diese an zwei Punkten am Fahrzeugrahmen befestigten, um die Achse geführten Fangseile sind zwar durchaus dafür geeignet, das Gewicht der Fahrzeugachse und die Druckkräfte der Luftfederbälge aufzunehmen und so den Rollbalg zu entlasten; jedoch müssen diese Fangvorrichtungen sehr genau bemessen und immer am gleichen Ort am Fahrzeugrahmen befestigt werden, damit gewährleistet wird, daß der Rollbalg trotz der Fangvorrichtung nicht überdehnt wird. Darüber hinaus besteht die Gefahr der mechanischen Beschädigung der offen unter dem Fahrzeugrahmen angeordneten Fangvorrichtungen bzw. des Achsrohres durch Scheuern der Fangseile am Achskörper.

Weiterhin ist es aus der DE-C-42 03 372 bekannt, die Luftfeder zu teilen und so auszubilden, daß beim Anheben des Fahrzeuges der Tauchkolben im Rollbalg verbleibt, während ein auf dem Längslenker angeordneter, in den Tauchkolben passender Topf als getrenntes Bauteil aus dem Tauchkolben heraustritt.

Der Erfindung liegt die **Aufgabe** zugrunde, eine ungeteilte Luftfeder der eingangs genannten Art zu schaffen, die Beschädigungen der Luftfederbälge vermeidet und für eine Kran- und Bahnverladung geeignet ist.

Die **Lösung** dieser Aufgabenstellung durch die Erfindung ist dadurch gekennzeichnet, daß im Inneren des Rollbalges mindestens ein den Deckel mit dem Tauchkolben verbindendes, die Streckung des Rollbalges begrenzendes Halteelement angeordnet ist.

Durch diese erfindungsgemäße Anordnung eines Halteelementes zwischen dem fahrgestellfesten Deckel und dem auf dem Längslenker festgelegten Tauchkolben wird gewährleistet, daß die Ausfederung der Achse beschränkt wird und somit bei einer Kran- und Bahnverladung das Gewicht der Achse nicht mehr zu einer Überdehnung des Rollbalges führt, da nunmehr das Gewicht der Achse über den Tauchkolben und das Halteelement auf den Fahrzeugrahmen übertragen wird. Weiterhin ist es bei dieser erfindungsgemäß ausgestalteten Luftfeder vorteilhaft, daß das Halteelement im Inneren des Rollbalges angeordnet ist, da es dort nicht nur vor mechanischen Beschädigungen geschützt ist, sondern die vorhandenen Befestigungspunkte des Luftfederbalges genutzt werden können.

Gemäß einer bevorzugten Ausführungsform der Erfindung ist das Halteelement als biegsames Seil, Kette, Gewebestrumpf oder Gewebeband ausgebildet. Diese Ausgestaltungen stellen technisch besonders einfach herstellbare und darüber hinaus zuverlässige Bauteile dar. Insbesondere die Ausgestaltung als Gewebeband oder Gewebestrumpf hat sich als vorteilhaft erwiesen, da sie kostengünstig ist und Korrosionsprobleme vermeidet.

Bei einer praktischen Ausführungsform ist das Halteelement tauchkolbenseitig an einem auf dem Tauchkolben angeordneten Puffer festlegbar.

Um nicht nur eine Überdehnung des Rollbalges zu verhindern, sondern auch beim Absetzen des Fahrzeuges ein zuverlässiges Abrollen des Rollbalges auf dem Tauchkolben zu gewährleisten, ist das Halteelement so bemessen, daß auch bei vollständiger Streckung des Halteelementes eine restliche Einrollung des Rollbalges auf dem Tauchkolben verbleibt.

Weitere Einzelheiten und Vorteile der Erfindung ergeben sich aus der nachfolgenden Beschreibung der zugehörigen Zeichnung, in der eine Luftfederachse mit einer erfindungsgemäß ausgebildeten Luftfeder in ausgefederter Lage schematisch in Seitenansicht dargestellt ist.

Bei der dargestellten Luftfederachse ist zwischen einem Teil eines Fahrzeugrahmens 1 und einem über eine Konsole 2 schwenkbar angelenkten Längslenker 3 für eine Achse 4 eine Luftfeder 5 eingebaut.

Die Luftfeder 5 besteht aus einem am Fahrzeugrahmen 1 befestigten Deckel 6, einem Rollbalg 7 und einem Tauchkolben 8, der über eine Bodenplatte 9 am Längslenker 3 festgelegt ist.

Auf der innerhalb des Rollbalges 7 angeordneten Oberseite des Tauchkolbens 8 ist ein Puffer 10 befestigt, der sich bei entlüfteter Luftfeder 5 gegen die Innenseite des Deckels 6 abstützt.

Die sich in der dargestellten ausgefederten Lage der Luftfeder 5 ergebende Streckung des Rollbalges 7 aufgrund des Gewichts bzw. der eigenen Druckkraft der Achse 4 wird durch ein Halteelement 11 begrenzt, das im Inneren des Rollbalges 7 angeordnet ist und den Deckel 6 mit dem Tauchkolben 8 verbindet. Beim dargestellten Ausführungsbeispiel besteht das Halteelement 11 aus zwei biegsamen Seilen, die mit einem Ende auf der Innenseite des Deckels 6 und mit dem anderen Ende am Puffer 10 befestigt sind.

Wie aus der Darstellung ersichtlich, wird das Gewicht der Achse 4 und des Längslenkers 3 in der ausgefederten Lage der Luftfeder 5 auf diese Weise über den Tauchkolben 8 und das Halteelement 11 in den Fahrzeugrahmen 1 abgeleitet, ohne daß es zu einer vollständigen Streckung des Rollbalges 7 kommt.

Die Länge des Halteelements 11 ist vorteilhafterweise so bemessen, daß nicht nur eine Überdehnung des Rollbalges 7 verhindert wird, sondern darüber hinaus selbst bei vollständiger Streckung des Halteelementes 11 der Rollbalg 7 noch ein wenig auf dem Tauchkolben 8 eingerollt ist, so daß beim Absetzen des Fahrzeuges der Rollbalg 7 störungsfrei außen über den Tauchkolben 8 abrollt.

### Bezugszeichenliste

- 1: Fahrzeugrahmen
- 2: Konsole
- 3: Längslenker
- 4: Achse
- 5: Luftfeder
- 6: Deckel
- 7: Rollbalg
- 8: Tauchkolben
- 9: Bodenplatte
- 10: Puffer
- 11: Halteelement

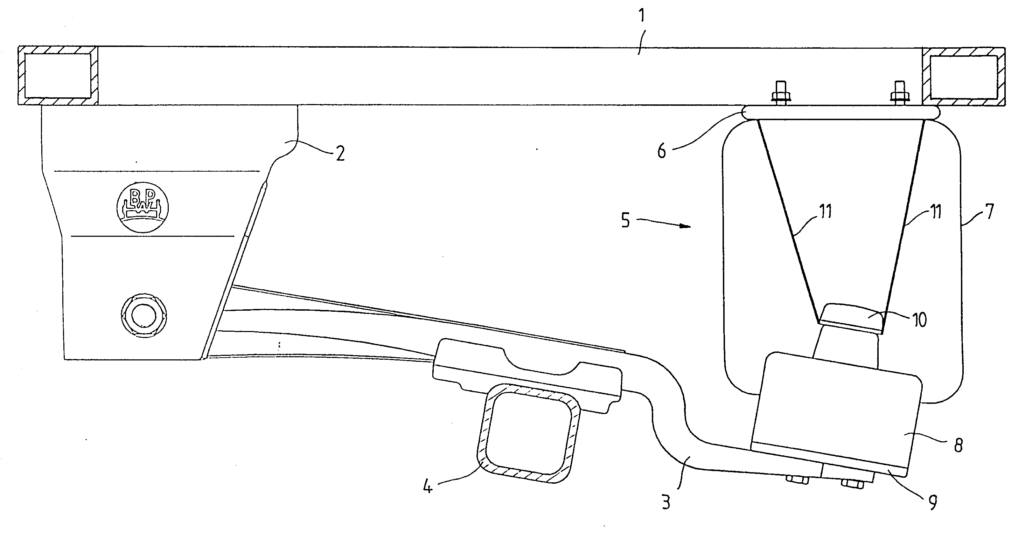

## Patentansprüche

1. Luftfeder für Luftfederachsen mit einem fahrgestellfesten Deckel (6) und einem auf einem rückwärtigen Ende eines Längslenkers (3) festgelegten Tauchkolben (8) sowie einem zwischen Deckel (6) und Tauchkolben (8) eingesetzten Rollbalg (7),
**dadurch gekennzeichnet,**
daß im Inneren des Rollbalges (7) mindestens ein den Deckel mit dem Tauchkolben (8) verbindendes, die Streckung des Rollbalges (7) begrenzendes Halteelement (11) angeordnet ist.

2. Luftfeder nach Anspruch 1, dadurch gekennzeichnet, daß das Halteelement 11 als biegsames Seil, Kette, Gewebeband oder Gewebestrumpf ausgebildet ist.

3. Luftfeder nach Anspruch 1 oder 2, dadurch gekennzeichnet, daß das Halteelement 11 tauchkolbenseitig an einem auf dem Tauchkolben (8) angeordneten Puffer (10) festlegbar ist.

4. Luftfeder nach mindestens einem der Ansprüche 1 bis 3, dadurch gekennzeichnet, daß auch bei vollständiger Streckung des Halteelementes (11) eine restliche Einrollung des Rollbalges (7) auf dem Tauchkolben (8) verbleibt.
